# EUROPEAN PATENT SPECIFICATION

(11) **EP 1 674 331 B1**
(45) Date of publication and mention of the grant of the patent: **15.08.2007**
(21) Application number: 05257980.2
(22) Date of filing: 22.12.2005
(51) Int. Cl.: B60N 2/23, B60N 2/68, B60N 2/44, B60N 2/70

(54) **Safety seat**
Sicherheitssitz
Siège de sécurité

(30) Priority: 22.12.2004 GB 0428089
(43) Date of publication of application: 28.06.2006
(73) Proprietor: Connaught Motor Company Ltd, Daventry Northamptonshire NN11 4AD (GB)
(72) Inventor: Bishop, Timothy, Eydon, Norhants, NN11 3PB (GB)
(74) Representative: Slingsby, Philip Roy

(56) References cited:
- EP-A- 0 704 338
- EP-A- 0 849 137
- DE-A1- 1 925 778
- DE-C1- 19 908 655
- US-A- 4 040 663

## Description

The present invention relates to a means of providing a safety seat and more particularly to a lightweight seat for use in an automotive vehicle.

A conventional motor vehicle seat is designed to provide comfort for an individual who in some cases will be occupying the seat continually for long periods of time. It is therefore important that the seat be as comfortable as possible whilst still being practical for its situation within the vehicle and conforming to certain stringent safety regulations.

Therefore most vehicle seats are adjustable to accommodate variations in the size and dimensions of an individual. The support provided by the seat is usually adjustable by means of levers or a turning knob at the side of the chair to provide a forward posture or reclined posture. Electric and hydraulic adjustments are commonly used and pneumatic adjustments are known to provide adjustment to the seat whilst an individual is occupying the seat. The height of the seat can also be adjusted to allow an individual's feet to rest properly on the floor to align with driving pedals with the upper body being properly aligned with the steering wheel. In addition the whole seat can usually be moved forward or rearwards on runners to accommodate the height of the individual. This not only means that the driver is driving comfortably but also that he is driving safely and provides adequate space for an airbag to function properly.

In addition the seat has to meet stringent safety legislation with regard to security of the adjustment mechanism and runners for resistance and strength in the event of front and rear impact. Relatively heavy and costly mechanical engineering solutions are known to be used to provide this strength, most of which is focussed around the reclining and tilt mechanisms whilst the remainder of the seat is equipped with springs, pressure pads and foams to form the overall package.

Traditionally, sports or racing cars had safety seats that were known as "bucket" seats. These eliminated the use of all mechanisms except fore and aft runners and comprised an upholstered seat with a backrest curved gently around the shoulders and thence downward and forwards past the hips in a progressively increasing chord to a low point at the front of the base cushion in the form of a kind of cross-bar. The base cushion simply dropped into the horizontal lower closing plate that held the upper structure together.

This design was basic in terms of comfort and location, with no provisions made for backrest or base adjustment and difficulty of entry and exit was accepted as the price to pay for the design.

The present invention is directed towards a safety seat without the aforementioned disadvantages.

The aim of the present invention is to establish independence of motion between base and backrest whilst completely removing the complex and heavy ratchet recline system. (This is known as the Keipper system).

US-A-4040663 discloses a seat provided with such a motion between base and backrest as defined by the preamble of claim 1.

Within the structural parameters a widely variable backrest position is established, whilst the juxtaposition of pivot and adjuster are as far removed from each other as possible, making for large improvements in strength during rear and offset-rear impact.

Furthermore the action in rear impact is not one of collapse, but is one of contraction of the sides of the seat, steadying the motion of the occupant whilst dissipating the impact energy and preserving the occupants neck

According to the present invention there is provided a seat for a vehicle, comprising a back support and a base, the back support being rotatable relative to the base about at least one axis and locking means for locking the back support in a rotational position, wherein the locking means acts on the back support at a point remote from the axis and the seat comprises a pair of side supports extending forwardly from the back support and joined by a cross piece.

Further advantageous features are described in claims 2 to 9.

An example of a seat made in accordance with the present invention will now be described with reference to the accompanying drawings, in which:
Figure 1 show a side view of a seat in accordance with the present invention; and
Figure 2 shows a side view of a clockwise rotated seat in accordance with the present invention.

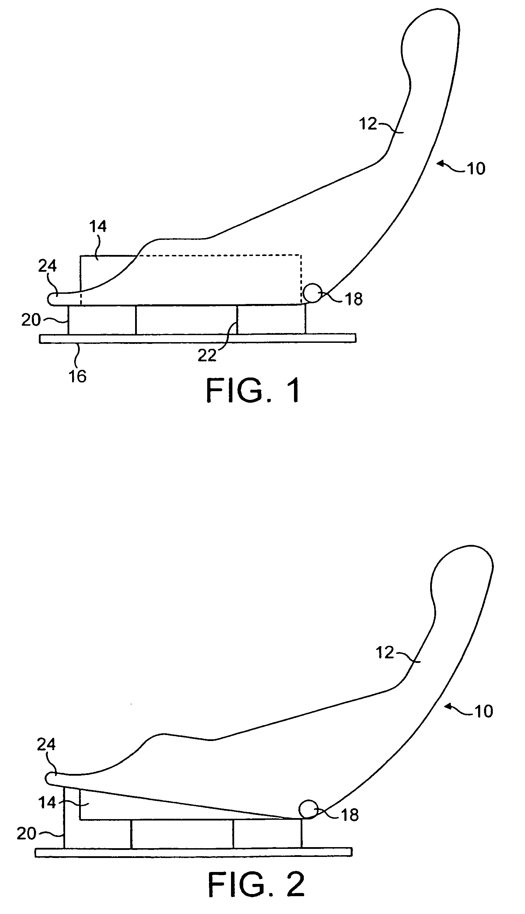

In figure 1 there is a seat 10 with a back and side support 12 and a base 14. In its simplest form the physical shape of the support 12 and the base 14 can be built up with foam or any other traditional method of straps and webbing and trimmed in the normal way. There could also be the addition of an air-inflatable "sub-layer" to the base 14 and lower back region of the support 12 that in normal operation is completely deflated. Upon removal of the ignition key or some such trigger inflation could be initiated, lifting the base (probably mainly at the rear) by a significant amount and eliminating the traditional bucket-seat difficulty of ingress and egress. Another option could be to use air-filled bladders in the same idiom as the pre-war Moseley "float on air" cushions, but with modern control and valving. Thus almost any aspect of the seat could be adjusted to personal requirement at the touch of a key-pad. A deflatable base to the backrest could also allow a deeper wrap-around of the seat sides under driving conditions, with further improvements in safety, particularly in side-impact, and could allow a fresh approach to side air-bag deployment. Finally, these sub-layers could collapse to a given thickness by being internally fitted with, for example, an open-cell foam base. The opportunity also exists to pass heated or cooled air continually through them from the vehicle climate control system whilst in motion. The back and side support 12 also comprises a crossbar 24 at the front of the side supports. This crossbar 24 extends across the front of the base 14. The back and side support can be connected to a runner mechanism 16 by a pivot 18 and jack 20, with the base 14 being in contact with the floor area by independent runners 22.

Figure 2 shows that when jack 20 is engaged the front of the back and side support 12 is raised and rotates in a clockwise direction about the pivot point 18. Base 14 does not rotate as it is independent of the support 12. In the clockwise direction rotation is limited with the crossbar 24 rising to an unacceptable level across the front of the base 14. Releasing the jack 20 causes the support 12 to rotate in an anti-clockwise direction about the pivot point. Rotation is limited by the jack in the anti-clockwise direction. The base 14 is forced to conform to motion in the fore and aft direction by being enclosed within the back and side support.

In this way the mechanism that locks the seat back and side support in position can be made smaller and lighter than in conventional seats, permitting the overall weight of a vehicle that incorporates such a seat to be reduced. It will be appreciated that especially in the case of a bucket-type seat, as illustrated in the figures, the arms of the seat - which are connected between the back and the forward part of the base to which the jacks are attached - resist relative rotation of the back and the crossbar 24. In such seats the present design permits the seat to be particularly strong for a given weight.

Each jack can conveniently take the form of a threaded rod attached at one end to the seat (or the floor or seat runners) and an internally threaded nut that runs on the rod and is attached to the floor (or the seat or its runners). By mutual rotation of the rod and the nut the relative rotational position of the seat and the floor can be set with a high degree of precision. Other forms of jack can also be used.

The structural components of the seat can preferably be made from high strength and light weight materials such as resin-fibre composites including reinforced carbon fibre materials. This can reduce the weight of the seat further.

## Claims

1. A seat (10) for a vehicle, comprising a back support (12) and a base (14), the back support being rotatable relative to the base about at least one axis (18) and locking means for locking the back support in a rotational position, wherein the locking means acts on the back support (12) at a point remote from the axis (18), **characterised in that** the seat comprises a pair of side supports (12) extending forwardly from the back support and joined by a cross piece (24).

2. A seat according to claim 1, wherein the axis of rotation is a hinge or pivot (18).

3. A seat according to claim 1 or claim 2, comprising rotation means (20) actuated by a user to act on the back support (12) at a point remote from the axis (18) to force the back support to rotate about the axis (18).

4. A seat according to claim 1 as dependent on claim 3, wherein the cross piece (24) is attached to the rotation means (20).

5. A seat according to any preceding claim, wherein the seat is mounted on runners (22).

6. A seat according to claim 5, wherein the base (14) is attached to the runners (12) independently of the back and side support (12).

7. A seat according to any preceding claim, wherein the base (14) is a cushion

8. A seat according to claim 7, wherein the cushion (14) has an inflatable cushion layer to the base of the seat.

9. A seat according to claim 7 or claim 8, wherein the cushion (14) comprises an open-cell foam.

## Patentansprüche

1. Sitz (10) für ein Fahrzeug, umfassend eine Rückenstütze (12) und einen Sockel (14), wobei die Rückenstütze relativ zu dem Sockel um wenigstens eine Achse (18) drehbar ist und ein Verriegelungsmittel, um die Rückenstütze in einer Drehstellung zu verriegeln, wobei das Verriegelungsmittel auf die Rückenstütze (12) an einer Stelle wirkt, die von der Achse (18) entfernt liegt, **dadurch gekennzeichnet, daß** der Sitz ein paar Seitenstützen (12) umfaßt, die sich von der Rückenstütze vorwärts erstrecken und über ein Querstück (24) verbunden sind.

2. Sitz nach Anspruch 1, bei welchem die Drehachse ein Gelenk oder ein Stellzapfen (18) ist.

3. Sitz nach Anspruch 1 oder Anspruch 2, umfassend eine Dreheinrichtung (20), die von einem Nutzer betätigt wird, um auf die Rückenstütze (12) an einer Stelle zu wirken, die von der Achse (18) entfernt liegt, um die Rückenstütze dazu zu zwingen, sich um die Achse (18) zu drehen.

4. Sitz nach Anspruch 1 in Abhängigkeit von Anspruch 3, bei welchem das Querstück (24) an der Dreheinrichtung (20) angebracht ist.

5. Sitz nach einem der vorstehenden Ansprüche, wobei der Sitz an Läufern (22) montiert ist.

6. Sitz nach Anspruch 5, bei welchem der Sockel (14) an den Läufern (12), unabhängig von den Rücken- und Seitenstützen (12) angebracht ist.

7. Sitz nach einem der vorstehenden Ansprüche, bei welchem der Sockel (14) ein Kissen ist.

8. Sitz nach Anspruch 7, bei welchem das Kissen (14) eine aufblasbare Kissenschicht an dem Sockel des Sitzes hat.

9. Sitz nach Anspruch 7 oder Anspruch 8, bei welchem das Kissen (14) einen offenporigen Schaumstoff umfaßt.

## Revendications

1. Siège (10) pour véhicule, comprenant un support dorsal (12) et une base (14), le support dorsal étant apte à tourner par rapport à la base autour d'au moins un axe (18), et un moyen de verrouillage pour verrouiller le support dorsal dans une position de rotation, le moyen de verrouillage agissant sur le support dorsal (12) en un point éloigné de l'axe (18), **caractérisé en ce que** le siège comprend une paire de supports latéraux (12) s'étendant vers l'avant depuis le support dorsal et réunis par une pièce transversale (24).

2. Siège selon la revendication 1, dans lequel l'axe de rotation est une charnière ou un pivot (18).

3. Siège selon la revendication 1 ou la revendication 2, comprenant un moyen de rotation (20) actionné par un utilisateur pour agir sur le support dorsal (12) en un point éloigné de l'axe (18) afin de forcer le support dorsal à tourner autour de l'axe (18).

4. Siège selon la revendication 1, sous réserve de rattachement à la revendication 3, dans lequel la pièce transversale (24) est fixée au moyen de rotation (20).

5. Siège selon l'une quelconque des revendications précédentes, dans lequel le siège est monté sur des glissières (22).

6. Siège selon la revendication 5, dans lequel la base (14) est fixée aux glissières (22) indépendamment du support dorsal et latéral (12).

7. Siège selon l'une quelconque des revendications précédentes, dans lequel la base (14) est un coussin.

8. Siège selon la revendication 7, dans lequel le coussin (14) comporte une couche de coussin gonflable au niveau de la base du siège.

9. Siège selon la revendication 7 ou la revendication 8, dans lequel le coussin (14) comprend une mousse à alvéoles ouverts.
